# FASCICULE DE BREVET EUROPEEN

(11) **EP 3 620 369 B1**
(45) Date de publication et mention de la délivrance du brevet: **22.03.2023**
(21) Numéro de dépôt: 19194839.7
(22) Date de dépôt: 02.09.2019
(51) Int. Cl.: B64C 1/14

(54) **SYSTEME DE PORTE AMELIORE POUR FUSELAGE D'AERONEF**
VERBESSERTES TÜRSYSTEM FÜR RUMPF EINES LUFTFAHRZEUGS
IMPROVED DOOR SYSTEM FOR AIRCRAFT FUSELAGE

(30) Priorité: 06.09.2018 FR 1858017
(43) Date de publication de la demande: 11.03.2020
(73) Titulaire: Airbus Operations SAS, 31060 Toulouse (FR)
(72) Inventeur: LIEVEN, Patrick, 31620 Fronton (FR); LACHE, Laurent, 31830 Plaisance du Touch (FR); DOUREL, Pierre, 31700 Cornebarrieu (FR)
(74) Mandataire: Cabinet Le Guen Maillet

(56) Documents cités:
- DE-A1- 10 343 627
- DE-A1- 19 825 405
- FR-A1- 2 898 864
- GB-A- 868 390
- GB-A- 2 042 060
- GB-A- 2 188 094
- US-A- 4 479 622
- US-A- 4 488 380

## Description

### DOMAINE TECHNIQUE

La présente invention se rapporte au domaine des systèmes de porte pour fuselage d'aéronef, du type comprenant une porte configurée pour être maintenue en position fermée par une différence de pression s'appliquant de part et d'autre de celle-ci. Ce type de porte est généralement dénommé « plug door ». Un tel système est par exemple connu du document US 4 488 380.

L'invention est applicable à tout type d'aéronef, et de préférence aux avions commerciaux. Elle est par exemple destinée à la réalisation d'une porte passagers ou d'une porte passagers et service, ou encore de toute autre porte donnant accès à un compartiment pressurisé de l'aéronef.

### ÉTAT DE LA TECHNIQUE ANTÉRIEURE

De l'art antérieur, il est connu des systèmes de porte utilisant la différence de pression entre un compartiment et l'extérieur de l'aéronef, pour maintenir la porte en position fermée contre un cadre de porte défini par le fuselage. Pour ce faire, la porte est généralement équipée de moyens de butée agencés à sa périphérie, et coopérant avec des moyens de butée complémentaires agencés sur la cadre de porte. En vol, la différence de pression s'appliquant de part et d'autre de la porte force les moyens de butée contre les moyens de butée complémentaires. L'une des particularités de ce type de porte, connu sous l'appellation anglaise « plug door », réside dans le fait que la différence de pression s'appliquant de part et d'autre de la porte entraîne une introduction d'efforts dans les moyens de butée et les moyens de butée complémentaires, mais pas ou peu d'efforts sur le dispositif de commande qui sert à la mise en mouvement de la porte entre ses diverses positions, et au verrouillage de la porte.

L'une des difficultés rencontrées pour la conception de ces systèmes réside dans la cinématique d'ouverture et de fermeture de la porte. En particulier, la cinématique d'ouverture doit permettre un désengagement des moyens de butée par rapport aux moyens de butée complémentaires. Dans l'art antérieur conventionnel, ce désengagement s'opère en réalisant un soulèvement de la porte, c'est-à-dire en produisant un mouvement de porte vertical ou avec une très forte composante verticale.

Si cette solution s'avère satisfaisante, elle requiert néanmoins des moyens particuliers pour assurer le mouvement vertical de la porte, avec notamment la présence d'un système de compensation de masse.

Dans le document US 4 488 380, ce désengagement se produit grâce à des moyens de butée mobiles et une commande de la porte pour la porter dans une position intermédiaire permettant le retrait des butées mobiles, la commande et le retrait étant effectués par une tringlerie à biellettes.

Par conséquent, il subsiste un besoin d'optimisation de la conception des systèmes de porte existants, afin de pallier l'inconvénient décrit ci-dessus.

### EXPOSÉ DE L'INVENTION

Pour répondre à ce besoin, l'invention a pour objet un système de porte pour fuselage d'aéronef, selon les caractéristiques de la revendication 1.

L'invention prévoit sur la porte des organes de butée dont le passage de la position déployée de verrouillage, à la position escamotée de déverrouillage, est rendu possible en amenant la porte dans une position intermédiaire de retrait. Cette position s'obtient en déplaçant la porte vers l'intérieur du compartiment, et non plus verticalement comme dans l'art antérieur conventionnel. En outre les organes mobiles de butée sont commandés au moyen d'une membrane d'actionnement mise sous pression.

La cinématique et les moyens mis en oeuvre pour l'ouverture et la fermeture de la porte s'en trouvent simplifiés.

L'invention présente par ailleurs au moins l'une des caractéristiques optionnelles suivantes, prises isolément ou en combinaison.

Chaque organe mobile de butée présente une première extrémité articulée sur la périphérie de la porte, ainsi qu'une seconde extrémité opposée à la première et formant une extrémité de contact avec le cadre de porte.

La seconde extrémité délimite une surface de contact arrondie.

La membrane d'actionnement est solidaire des organes mobiles de butée. D'autres solutions de coopération sont également possibles entre la membrane d'actionnement et les organes mobiles de butée, comme un simple appui de ces organes sur la membrane.

Le dispositif de commande des moyens de butée comporte également des moyens élastiques de rappel, rappelant les organes mobiles de butée en position escamotée de déverrouillage, en générant un effort s'opposant aux efforts de pression s'exerçant sur la membrane d'actionnement à l'intérieur de la chambre de commande, les moyens élastiques de rappel étant préférentiellement agencés à l'intérieur de la chambre de commande.

La membrane d'actionnement forme un joint d'étanchéité entre la porte et le cadre de porte, le joint d'étanchéité étant continu tout le long de la périphérie de la porte.

Le dispositif de commande de porte comporte :
- au moins une poignée de commande ;
- au moins un organe de commande piloté par la poignée de commande et monté articulé sur la porte selon un axe d'articulation, chaque organe de commande définissant une piste de guidage recevant un organe suiveur solidaire du cadre de porte.

Le dispositif de commande de porte est configuré de telle sorte que chaque organe de commande puisse être mis en rotation entre une position de maintien et une position de libération, cette rotation de l'organe de commande selon l'axe d'articulation, entre sa position de maintien et sa position de libération, provoquant un déplacement de l'organe suiveur le long de la piste de guidage, conduisant la porte de sa position fermée à sa position intermédiaire de retrait.

Dans sa position de maintien, l'organe de commande est empêché par l'organe suiveur de se déplacer relativement au cadre de porte, vers l'intérieur du compartiment, et en ce que dans sa position de libération, l'organe de commande peut se déplacer relativement au cadre de porte, vers l'extérieur.

L'invention a également pour objet un aéronef comprenant un fuselage équipé d'au moins un tel système de porte, de préférence pour former une porte passagers ou une porte passagers et service.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue de côté d'un aéronef selon l'invention ;
- la figure 2 représente une vue en perspective d'un système de porte équipant l'aéronef montré sur la figure précédente ;
- la figure 3 représente une vue de face de la porte équipant le système de porte montré sur la figure précédente ;
- la figure 4 représente une vue de côté de la porte montrée sur la figure précédente ;
- la figure 5 est une vue en coupe de la porte, prise selon la ligne V-V de la figure 3 ;
- la figure 6 est une vue de dessus d'une partie de la porte montrée sur la figure précédente ;
- la figure 7 est une vue en coupe agrandie d'une partie du système de porte montré sur les figures précédentes, la ligne de coupe correspondant à la ligne VII-VII de la figure 2 ;
- la figure 8 représente une vue de côté d'une partie d'un dispositif de commande de porte équipant le système montré sur les figures précédentes ;
- les figures 9 et 10 sont des vues en perspective, selon différents angles de vue, d'une partie du dispositif de commande montré sur la figure précédente ; et
- les figures 11 à 15 représentent des vues similaires aux figures 7 et 8, avec le système de porte se trouvant dans des états différents au cours d'une opération d'ouverture de la porte.

### EXPOSÉ DÉTAILLÉ DE MODES DE RÉALISATION PRÉFÉRÉS

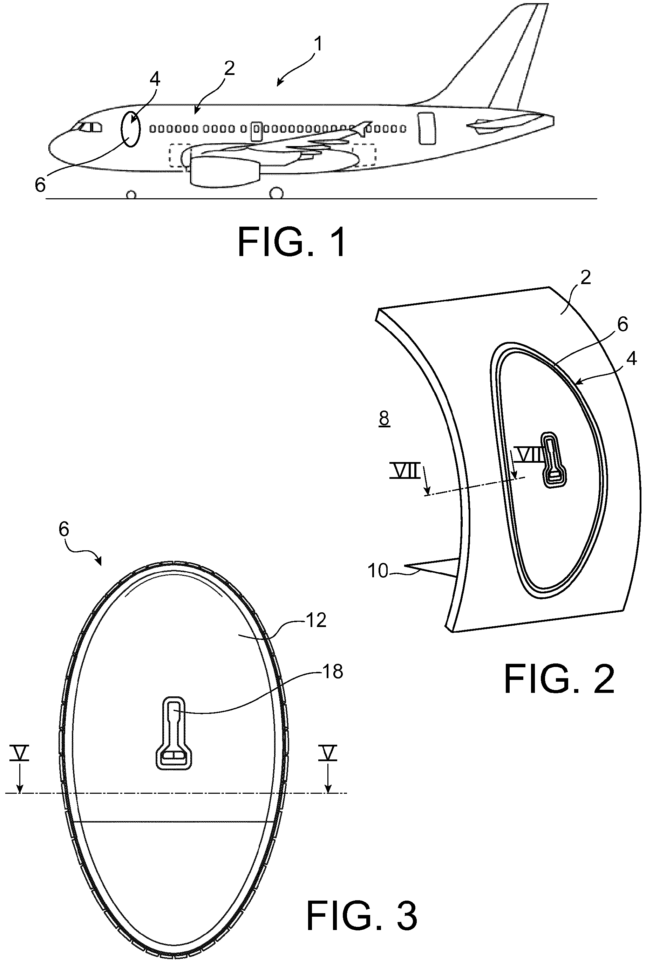

La figure 1 représente un aéronef 1, comprenant un fuselage 2 équipé d'un système de porte 4 selon l'invention. Ce système 4 comprend une porte 6 formant une porte passagers donnant accès à un compartiment pressurisé 8 de l'aéronef. La porte 6 présente par exemple une forme du type ovoïde visible sur la figure 2, et s'étend préférentiellement de part et d'autre d'un plancher 10 sur lequel sont fixés des sièges passagers (non représentés).

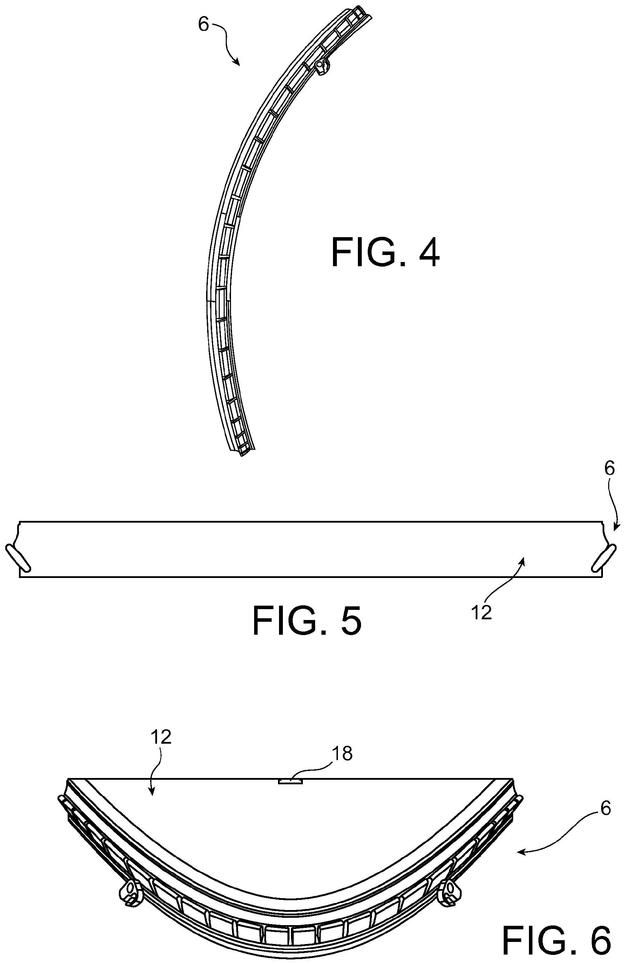

En référence à présent aux figures 3 à 6, il est montré de manière plus détaillée la porte 6, qui présente une forme générale s'adaptant à celle du fuselage. Elle comporte une structure principale 12. Sur la surface extérieure de la structure principale 12, il est prévu une poignée extérieure de commande 18.

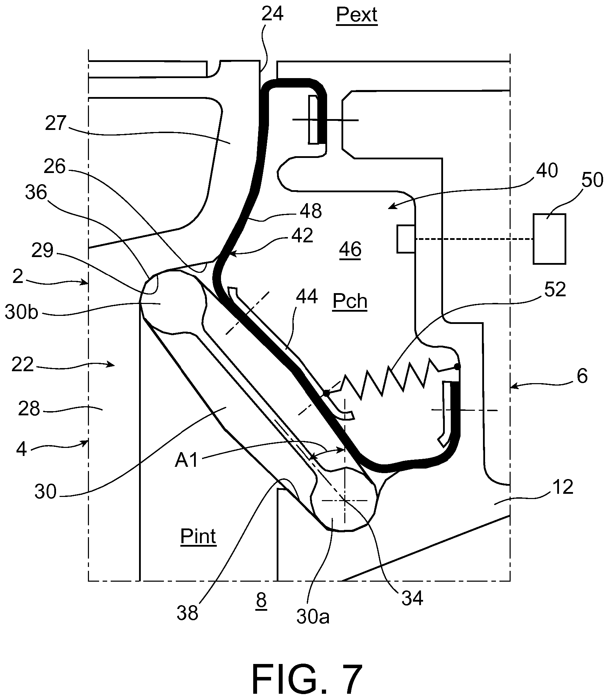

En référence aux figures 7 à 10, il est décrit de manière plus détaillée le système de porte 4 et ses moyens de commande.

Le système de porte 4 comprend un cadre de porte 22 délimitant une ouverture 24 dans le fuselage 2, cette ouverture donnant accès au compartiment pressurisé 8. La forme globale de ce cadre 22 correspond à celle de la porte 6, puisqu'en position fermée de celle-ci telle que montrée sur la figure 7, la porte obture l'ouverture 24 de manière étanche. A cet égard, il est indiqué que la forme de la coupe montrée sur cette figure 7 correspond à celle rencontrée tout le long de la jonction entre le cadre 22 et la périphérie de la porte 6.

Le cadre 22 présente un siège 26 en regard vers l'intérieur du compartiment 8. Ce siège 26 se matérialise par un élargissement du passage 24. En effet, après le siège 26 en direction de l'extérieur, le cadre présente une armature de sortie 27 définissant un rétrécissement de l'ouverture 24. A l'inverse, après le siège 26 en direction du compartiment 8, le cadre de porte 22 présente une armature intérieure 28 définissant un élargissement de l'ouverture 24. Un rayon de courbure 29 peut être prévu entre le siège 26 et l'armature intérieure 28.

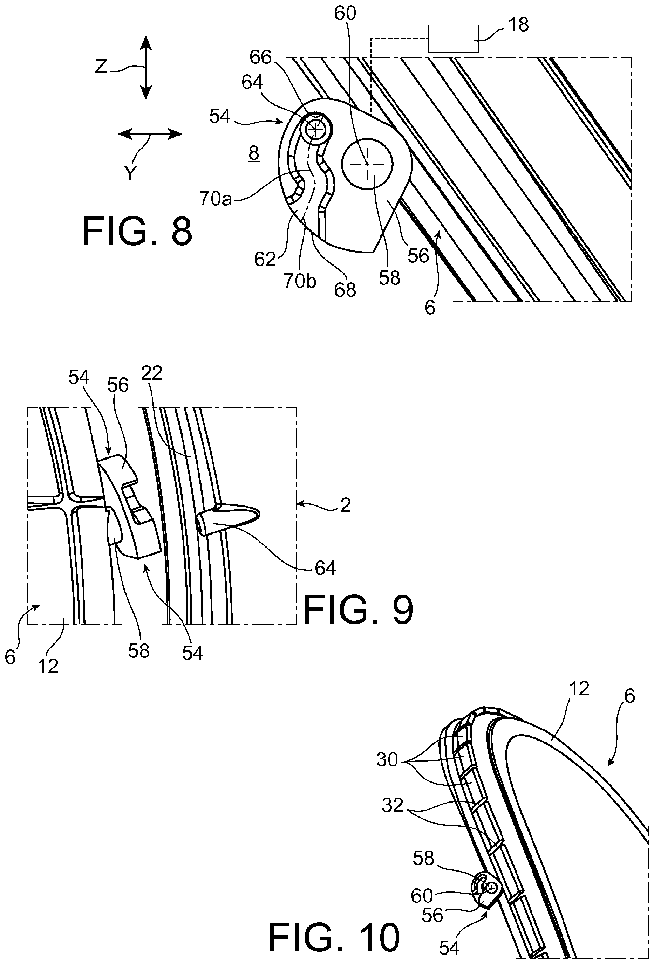

La porte 6 présente une conception du type « plug door », c'est-à-dire que sa position fermée de la figure 7 est maintenue en vol du fait de la différence de pression de part et d'autre de cette porte. Durant la phase de vol, la pression à l'intérieur du compartiment 8, dénommée « Pint », est effectivement supérieure à la pression extérieure dénommée « Pext », ce qui force la porte 6 en appui contre le cadre 22. Pour ce faire, la périphérie de la porte 6 est équipée de moyens de butée prenant la forme d'une pluralité d'organes mobiles de butée 30. Ces organes se succèdent tout le long de la périphérie de la porte 6, en laissant subsister entre eux des jeux circonférentiels 32 référencés sur la figure 10. Chaque organe mobile de butée 30 peut être un volet, par exemple de forme générale rectangulaire. Une première extrémité 30a de chaque organe de butée 30 est articulée sur la périphérie de la porte 6, selon un axe d'articulation 34 qui est préférentiellement sensiblement parallèle localement à une direction tangentielle de la porte. Une seconde extrémité 30b, opposée à la première extrémité 30a, forme une extrémité de contact avec le cadre de porte. Plus précisément, en position fermée de la porte 6, cette seconde extrémité 30b est en appui sur le siège 26 du cadre 22, cet appui pouvant se prolonger jusqu'au niveau du rayon de courbure 29. Pour améliorer le contact, la seconde extrémité 30b délimite une surface de contact arrondie 36, de forme complémentaire de celle du rayon de courbure 29. Par conséquent, le siège 26 et/ou le rayon de courbure 29 forment des moyens de butée complémentaires, contre lesquels les organes 30 sont forcés en appui du fait de la différence de pression s'appliquant de part et d'autre de la porte 6 durant le vol. La totalité ou la quasi-totalité des efforts résultant de la différence de pression s'appliquant sur la porte est introduite dans ces organes 30, et dans les moyens de butée complémentaires recevant ces organes.

Chaque organe mobile de butée 30 adopte ici une position déployée de verrouillage, dans laquelle leur seconde extrémité 30b fait saillie de la périphérie de la porte. L'angle d'ouverture A1 de chaque organe 30 peut être fixé par une butée 38 sur la périphérie de la structure principale de porte 12.

Le système 4 comprend également un dispositif de commande des moyens de butée, ce dispositif portant la référence globale 40 sur la figure 7. Comme cela sera explicité ultérieurement, ce dispositif 40 permet, dans certaines circonstances particulières, de provoquer le déplacement des organes mobiles de butée 30 de leur position déployée de verrouillage, vers une position escamotée de déverrouillage. Ce dispositif 40 n'est pas ou peu sollicité mécaniquement lorsque la porte est maintenue en position fermée par la différence de pression régnant de part et d'autre de cette porte.

Le dispositif de commande 40 comporte une membrane d'actionnement 42, agencée à la périphérie de la porte, et préférentiellement solidaire des organes mobiles de butée 30. Ces organes 30 sont en effet fixés sur la surface externe de la membrane 42, par exemple via des platines de fixation 44 agencées sur la surface interne de cette membrane 42. Celle-ci délimite, avec la périphérie de la porte 6, une chambre de commande 46 des organes 30, qui s'étend tout le long de cette périphérie. La chambre 46 est destinée à être remplie d'air, et sa pression dénommée « Pch » conditionne le déploiement de la membrane 42, et donc l'angle d'ouverture A1 des organes mobiles de butée 30.

La partie extérieure de la membrane 42 forme un joint d'étanchéité 48 entre la porte 6 et le cadre de porte 22, ce joint s'étendant de manière continue tout le long de la périphérie de la porte 6. Lorsque la membrane d'actionnement 42 est déployée comme sur la figure 7, la surface externe de cette partie extérieure de membrane repose en effet en appui sur l'armature de sortie 27 du cadre 22.

Le dispositif de commande 40 comporte également des moyens 50 de contrôle en pression de la chambre de commande 46. Ces moyens 50 peuvent être couplés à un compresseur d'air permettant de mettre en pression et/ou en dépression la chambre 46, afin de piloter la position de la membrane 42 et des organes 30 qui y sont rattachés.

Enfin, le dispositif de commande 40 comprend des moyens élastiques de rappel, en forme de ressorts de tension 52 reliant la structure principale de porte 12 aux platines de fixation 44. Ces ressorts 52 exercent un effort rappelant les organes mobiles de butée 30 en position escamotée de déverrouillage, puisque cet effort s'oppose aux efforts de pression d'air s'exerçant sur la membrane d'actionnement 42 à l'intérieur de la chambre 46. Les ressorts 52 sont agencés à l'intérieur de la chambre de commande 46, et ils permettent en effet de tirer la membrane 42 vers la structure principale 12, lorsque la pression dans la chambre 46 descend en dessous d'une valeur déterminée. Néanmoins, la présence de ces ressorts n'est pas obligatoire, puisque le déplacement de la membrane d'actionnement 42 pourrait être réalisée exclusivement en commandant la mise en pression /dépression de la chambre 46, via les moyens 50.

Par ailleurs, le système de porte 4 comprend un dispositif de commande de porte, ce dispositif portant la référence globale 54 sur les figures 8 à 10.

Il comporte la poignée extérieure de commande 18 montrée sur les figures 3 à 6, mais également une poignée intérieure de commande (non représentée). Ces deux poignées sont embarquées sur la porte 6, et respectivement actionnables depuis l'extérieur de l'aéronef, et depuis le compartiment pressurisé 8. Elles pilotent chacune, indépendamment l'une de l'autre, un ou plusieurs organes de commande 56 agencés à la périphérie de la porte, et reliés aux poignées selon un dispositif de transmission (non représenté). Ce sont par exemple quatre organes de commande 56 qui sont agencés à la périphérie de la porte.

Plus précisément, chaque organe de commande 56 est monté articulé sur la périphérie de la structure principale de porte 12, autour d'un organe d'articulation 58 s'étendant selon un axe d'articulation 60. Cet axe 60 est préférentiellement orthogonal, localement, au chant périphérique de la porte 6.

Les organes de commande 56 sont ainsi prévus pour être pilotés en rotation simultanément par l'une des deux poignées, depuis l'extérieur ou l'intérieur du compartiment 8. Chaque organe de commande définit une piste de guidage 62 recevant un organe suiveur 64 solidaire du cadre de porte. L'organe suiveur 64, de préférence en forme de pion, est sensiblement parallèle à l'organe d'articulation 58 prévu sur la porte 6.

La piste de guidage 62 est de préférence un rail de guidage, le long duquel l'organe suiveur 64 peut se déplacer. Ce rail comprend une première extrémité obturée 66, ainsi qu'une seconde extrémité opposée 68, ouverte et évasée. Le rail 62 définit un premier chemin 70a qui débute par la première extrémité 66, ainsi qu'un second chemin 70b poursuivant le premier, et s'achevant par la seconde extrémité 68.

Le fonctionnement du système de porte 4 va maintenant être décrit. En phase de vol, la porte 6 se trouve en position fermée, avec ses organes mobiles de butée 30 en position déployée de verrouillage. La pression Pint à l'intérieur du compartiment 8 est supérieure à la pression extérieure Pext, de sorte que la porte 6 et ses organes de butée 30 sont forcés vers l'extérieur, contre le cadre de porte 22. Plus précisément, ces organes 30 sont forcés en appui contre le siège 26 du cadre. L'angle A1 montré sur la figure 7 ne peut être augmenté, du fait de la butée 38 et de l'appui des organes 30 contre l'armature intérieure 28 du cadre 22. Cet angle A1 ne peut pas non plus être réduit, puisque la seconde extrémité 30b des organes 30 est en appui sur le siège 26, qui empêche une rotation des organes 30 dans ce sens. En position fermée de la porte, les organes 30 sont maintenus dans leur position déployée de verrouillage, et ainsi empêchés de se déplacer vers leur position escamotée de déverrouillage. Ce blocage en rotation des organes mobiles de butée 30 s'opère quelle que soit la pression Pch à l'intérieur de la chambre de commande 46, qui est par exemple fixée à la même valeur que la pression Pint durant le vol, ou encore plus préférentiellement à une pression supérieure.

Il est également noté que pendant le vol, les organes de commande 56 adoptent une position de maintien montrée sur la figure 8. Dans cette position de maintien, l'organe suiveur 64 se trouve dans le rail 62 au niveau de la première extrémité 66 du premier chemin 70a. Ce premier chemin 70a est de forme sensiblement circulaire, et concentrique à l'axe d'articulation 60. L'organe suiveur 64 est alors enserré radialement entre deux flancs de rail situés de part et d'autre de cet organe 64. L'organe de commande 56 est ainsi empêché de se déplacer relativement au cadre 22, selon la direction transversale Y, par l'organe suiveur 64 retenu dans le rail 62. En particulier, l'organe de commande 56 est empêché de se déplacer selon la direction transversale Y vers l'intérieur du compartiment 8. Il s'agit d'une butée mécanique qui s'ajoute au différentiel de pression d'air pour interdire à la porte 6 de se déplacer transversalement vers l'intérieur du compartiment 8. Par conséquent, il n'existe aucune possibilité pour les organes mobiles de butée 30 de se rétracter vers leur position escamotée de déverrouillage.

Au sol, après l'atterrissage, la pression Pint à l'intérieur du compartiment 8 est sensiblement identique à la pression extérieure Pext, correspondant à la pression atmosphérique. Par conséquent, le phénomène de différentiel de pression ne se produit plus, et la position fermée de la porte 6 est assurée uniquement par la butée mécanique de l'organe suiveur 64 dans la première extrémité 66 du premier chemin 70a du rail 62. Cette position fermée de la porte 6 est ainsi conservée tant que l'une des poignées de commande 18 n'est pas actionnée par une personne autorisée.

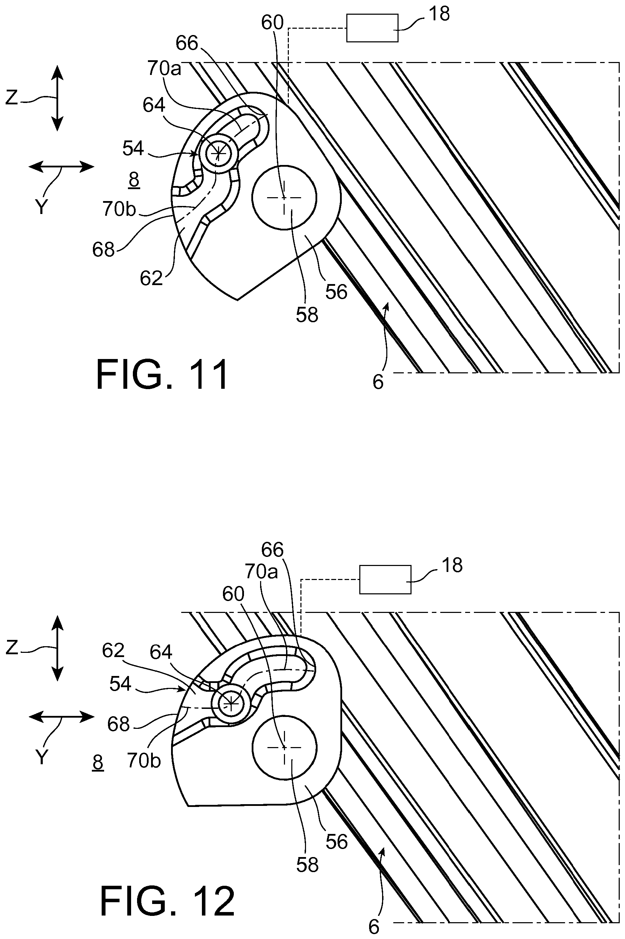

Au sol, lorsque la porte 6 doit être ouverte, l'une des deux poignées 18 est actionnée, ce qui a pour conséquence de débuter le pivotement de l'organe de commande 56 selon l'axe d'articulation 60. Pendant la phase initiale de pivotement de cet organe 56, l'organe suiveur 64 se déplace dans le rail 62, le long du premier chemin 70a. Dans cette phase initiale représentée sur la figure 11, aucun déplacement relatif ne se produit selon la direction transversale Y entre la porte 6 et le cadre de porte auquel est solidarisé l'organe suiveur 64. Cette phase initiale peut être utilisée pour déclencher une perte de pression Pch au sein de la chambre d'actionnement, pour aboutir aux conséquences qui seront décrites ci-après.

Dans la seconde phase de pivotement de l'organe 56 selon l'axe 60, il est toujours observé un déplacement relatif de l'organe suiveur 64 dans le rail 62, le long de la seconde partie du premier chemin 70a. Dans cette seconde partie, qui n'est plus concentrique à l'axe 60, la distance du chemin 70a à cet axe 60 se réduit en se rapprochant du second chemin 70b. Du fait de cette diminution de distance, il se produit un déplacement transversal de la porte 6 relativement au cadre de porte, vers l'intérieur du compartiment 8.

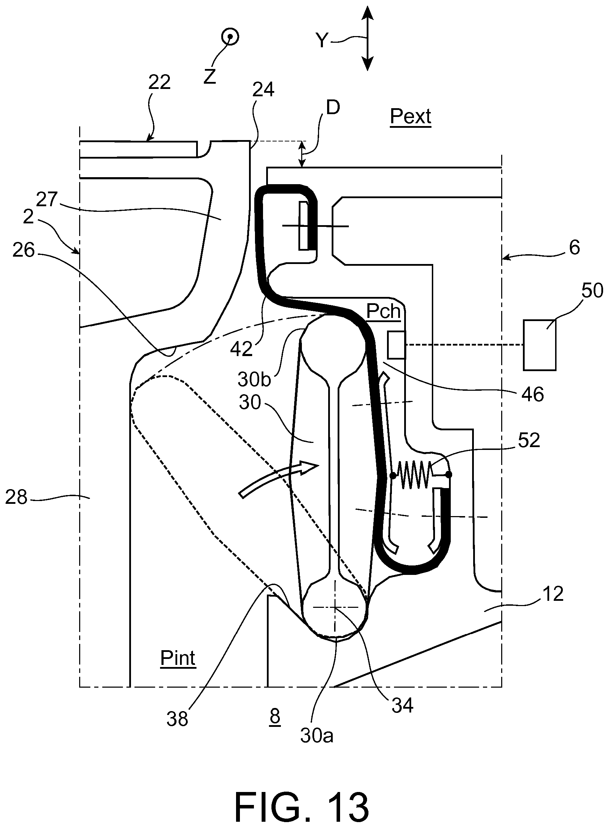

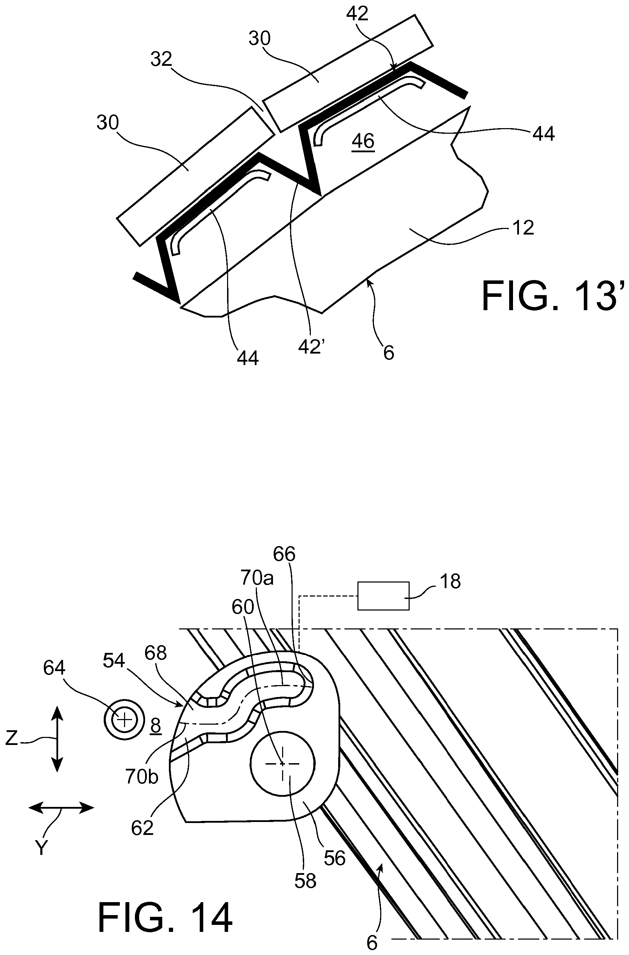

A la fin du pivotement de l'organe de commande 56 schématisée sur la figure 12, c'est-à-dire après une amplitude de rotation de l'ordre de 30 à 60° de cet organe 56, celui-ci adopte alors une position de libération dans laquelle l'organe suiveur 64 se trouve à la jonction entre les deux chemins 70a, 70b du rail 62. Ainsi, lors du déplacement de sa position de maintien de la figure 8, à sa position de libération de la figure 12, l'organe 56 provoque le déplacement de l'organe suiveur 64 le long du premier chemin 70a, avec pour conséquence le déplacement de la porte 6 vers l'intérieur. Cette porte 6 est alors amenée dans une position intermédiaire de retrait schématisée sur la figure 13, dans laquelle elle est effectivement en retrait selon la direction Y d'une valeur « D » par exemple comprise entre 5 et 10 mm. Aucun déplacement ne se produit selon la direction verticale Z.

Une fois ce retrait de la porte opéré et la pression Pch régulée à une valeur désirée dans la chambre de commande 46, par exemple à la pression atmosphérique ou à une pression inférieure, la seconde extrémité 30a des organes de butée 30 se trouve suffisamment décalée du siège 26 pour autoriser un pivotement de ces organes 30 selon l'axe 34. Ce pivotement s'opère sous l'effet des ressorts 52 forçant la membrane d'actionnement 42 ainsi que les organes 30 vers la périphérie de la porte 6, éventuellement en combinaison avec la dépression réalisée dans la chambre 46 par régulation adéquate de la pression Pch.

Ce sont donc ces ressorts de tension 52 qui conduisent les organes mobiles de butée 30 à se déplacer de leur position déployée de verrouillage de la figure 7, à la position escamotée de déverrouillage de la figure 13. A cet égard, il est noté que lorsque la membrane 42 se rapproche la périphérie de la structure de porte 12, des pliures 42' se forment au niveau des espaces formés entre les platines de fixation 44, comme cela a été schématisé sur la figure 13'. Ces pliures de membrane 42' permettent de faire face à la diminution du périmètre de la membrane 42, lorsqu'elle se rapproche de la périphérie de porte sous l'effet des ressorts 52.

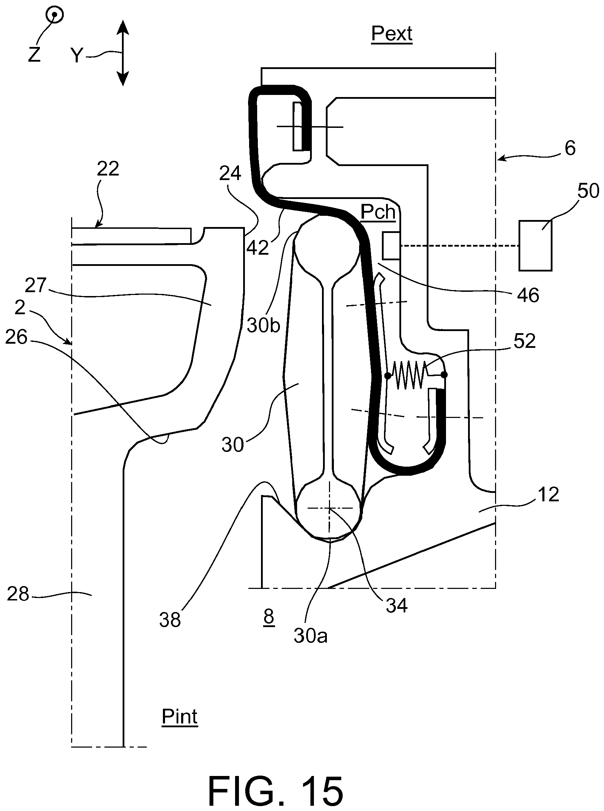

Enfin, une fois que cette position escamotée est adoptée par les organes mobiles de butée 30, la porte 6 peut être déplacée transversalement vers l'extérieur à travers l'ouverture 24 du cadre 22, en passant par le rétrécissement formé par l'armature de sortie 27. Ce déplacement schématisé sur la figure 15, de préférence uniquement transversal et sans composante verticale, est autorisé par la position de libération de l'organe de commande 56, montrée sur la figure 14. En effet, le second chemin 70b est alors orienté sensiblement transversalement, ce qui implique que l'organe de commande 56 peut se déplacer selon la direction Y relativement au cadre 22, sans être gêné par l'organe suiveur 64. Comme représenté sur la figure 14, l'organe suiveur 64 s'échappe ensuite par la seconde extrémité de rail 68 qui suit le mouvement transversal vers l'extérieur de la porte 6.

Une fois le cadre de porte traversé par la porte, le mouvement d'ouverture de cette porte reste conventionnel, de préférence parallèle au fuselage, afin que la porte puisse être amenée à côté du cadre, contre le fuselage. Ce mouvement est dicté par des moyens connus (non représentés), du type guides et bras d'articulation agencés à l'interface entre le cadre de porte et la porte.

Lors d'une opération de fermeture de la porte, les étapes décrites ci-dessus sont opérées dans le sens inverse. Néanmoins, il est préférentiellement fait en sorte que le passage des organes mobiles de butée 30 de leur position escamotée de déverrouillage, à leur position déployée de verrouillage, soit opéré avant le déplacement de la porte 6 de sa position intermédiaire de retrait vers sa position fermée. Cette mise en mouvement des organes 30, réalisée par augmentation de la pression Pch dans la chambre 46 via les moyens 50, peut alternativement être réalisée pendant le déplacement transversal de la porte 6 vers sa position fermée. Dans un tel cas, le déploiement des organes 30 est réalisé suffisamment tôt au cours du mouvement de la porte 6, afin que ces organes 30 puissent atteindre leur position déployée de déverrouillage sans buter contre l'armature de sortie 27 du cadre de porte 22.

Au vu de ce qui précède, le déploiement des organes mobiles de butée 30 est ainsi obtenu lorsque la pression Pch appliquée dans la chambre 46 induit sur la membrane 42 des efforts supérieurs à ceux résultant de la pression Pint et des ressorts 52.

Bien entendu, diverses modifications peuvent être apportées par l'homme du métier à l'invention qui vient d'être décrite, uniquement à titre d'exemples non limitatifs et selon la portée définie par les revendications annexées.

## Revendications

1. Système de porte (4) pour fuselage d'aéronef, le système comportant :
- un cadre de porte (22) délimitant une ouverture (24) dans le fuselage (2), l'ouverture donnant accès à un compartiment (8) de l'aéronef ;
- une porte (6) prévue pour obturer l'ouverture (24) lorsqu'elle occupe une position fermée, cette position fermée de la porte étant destinée à être maintenue par différence de pression entre l'extérieur du fuselage (2) et le compartiment (8) ;
- des moyens de butée (30) agencés à la périphérie de la porte, et destinés à être en appui sur des moyens de butée complémentaires (26, 29) prévus sur le cadre de porte,
le système comportant également un dispositif de commande de porte (54) configuré pour amener la porte (6) de sa position fermée à une position intermédiaire de retrait en la déplaçant vers l'intérieur du compartiment (8), et inversement en la déplaçant vers l'extérieur,
les moyens de butée comportant une pluralité d'organes mobiles de butée (30) se succédant le long de la périphérie de la porte,
le système comportant également un dispositif de commande des moyens de butée (40) configuré de manière à permettre, lorsque la porte (6) occupe sa position intermédiaire de retrait, de provoquer un déplacement des organes mobiles de butée (30) d'une position déployée de verrouillage, à une position escamotée de déverrouillage autorisant un déplacement de la porte vers l'extérieur à travers l'ouverture (24) du fuselage,
le système étant configuré de manière à ce que dans la position fermée de la porte, l'appui des organes mobiles de butée (30), contre les moyens de butée complémentaires (26, 29) du cadre de porte (22), empêche ces organes mobiles (30) d'être déplacés vers leur position escamotée de déverrouillage,
**caractérisé en ce que** le dispositif de commande des moyens de butée (40) comporte :
- une membrane d'actionnement (42) agencée à la périphérie de la porte et coopérant avec les organes mobiles de butée (30), la membrane (42) délimitant une chambre de commande (46) ;
- des moyens de contrôle en pression (50) de la chambre de commande (46), la pression à l'intérieur de la chambre (46) conditionnant la position de la membrane (42) et celle des organes mobiles de butée (30) coopérant avec cette membrane.

2. Système de porte selon la revendication 1, **caractérisé en ce que** chaque organe mobile de butée (30) présente une première extrémité (30a) articulée sur la périphérie de la porte, ainsi qu'une seconde extrémité (30b) opposée à la première et formant une extrémité de contact avec le cadre de porte.

3. Système de porte selon la revendication 2, **caractérisé en ce que** la seconde extrémité (30b) délimite une surface de contact arrondie (36).

4. Système de porte selon l'une quelconque des revendications précédentes, **caractérisé en ce que** la membrane d'actionnement (42) est solidaire des organes mobiles de butée (30).

5. Système de porte selon la revendication 4, **caractérisé en ce que** le dispositif de commande des moyens de butée (40) comporte également des moyens élastiques de rappel (52), rappelant les organes mobiles de butée (30) en position escamotée de déverrouillage, en générant un effort s'opposant aux efforts de pression s'exerçant sur la membrane d'actionnement (42) à l'intérieur de la chambre de commande (46), les moyens élastiques de rappel (52) étant préférentiellement agencés à l'intérieur de la chambre de commande (46).

6. Système de porte selon la revendication 4 ou la revendication 5, **caractérisé en ce que** la membrane d'actionnement (42) forme un joint d'étanchéité (48) entre la porte (6) et le cadre de porte (22), le joint d'étanchéité (48) étant continu tout le long de la périphérie de la porte.

7. Système de porte selon l'une quelconque des revendications précédentes, **caractérisé en ce que** le dispositif de commande de porte (54) comporte :
- au moins une poignée de commande (18) ;
- au moins un organe de commande (56) piloté par la poignée de commande (18) et monté articulé sur la porte selon un axe d'articulation (60), chaque organe de commande définissant une piste de guidage (62) recevant un organe suiveur (64) solidaire du cadre de porte (22).

8. Système de porte selon la revendication 7, **caractérisé en ce que** le dispositif de commande de porte (54) est configuré de telle sorte que chaque organe de commande (56) puisse être mis en rotation entre une position de maintien et une position de libération, cette rotation de l'organe de commande selon l'axe d'articulation (60), entre sa position de maintien et sa position de libération, provoquant un déplacement de l'organe suiveur (64) le long de la piste de guidage (62), conduisant la porte (6) de sa position fermée à sa position intermédiaire de retrait.

9. Système de porte selon la revendication 8, **caractérisé en ce que** dans sa position de maintien, l'organe de commande (56) est empêché par l'organe suiveur (64) de se déplacer relativement au cadre de porte (22), vers l'intérieur du compartiment (8), et **en ce que** dans sa position de libération, l'organe de commande (56) peut se déplacer relativement au cadre de porte (22), vers l'extérieur.

10. Aéronef (1) comprenant un fuselage (2) équipé d'au moins un système de porte (4) selon l'une quelconque des revendications précédentes.

## Patentansprüche

1. Türsystem (4) für den Rumpf eines Luftfahrzeugs, wobei das System Folgendes aufweist:
- einen Türrahmen (22), der eine Öffnung (24) im Rumpf (2) begrenzt, wobei die Öffnung Zugang zu einem Raum (8) des Luftfahrzeugs gewährt;
- eine Tür (6), die dazu vorgesehen ist, die Öffnung (24) zu verschließen, wenn sie eine geschlossene Position einnimmt, wobei die geschlossene Position der Tür durch eine Druckdifferenz zwischen dem Äußeren des Rumpfs (2) und dem Raum (8) aufrechterhalten werden soll;
- Anschlagmittel (30), die am Umfang der Tür angeordnet und dazu bestimmt sind, an komplementären Anschlagmitteln (26, 29), die am Türrahmen vorgesehen sind, anzuliegen,
wobei das System außerdem eine Türantriebsvorrichtung (54) aufweist, die dazu ausgelegt ist, die Tür (6) aus ihrer geschlossenen Position in eine zurückgezogene Zwischenposition zu bringen, indem sie sie in das Innere des Raums (8) bewegt, und umgekehrt, indem sie sie nach außen bewegt,
wobei die Anschlagmittel mehrere bewegliche Anschlagelemente (30) umfassen, die entlang des Umfangs der Tür aufeinanderfolgen,
wobei das System außerdem eine Steuervorrichtung für die Anschlagmittel (40) aufweist, die dazu ausgelegt ist, wenn die Tür (6) ihre zurückgezogene Zwischenposition einnimmt, eine Verschiebung der beweglichen Anschlagelemente (30) von einer ausgefahrenen Verriegelungsposition in eine eingefahrene Entriegelungsposition zu ermöglichen, die eine Verschiebung der Tür nach außen durch die Öffnung (24) des Rumpfs ermöglicht,
wobei das System so gestaltet ist, dass in der geschlossenen Position der Tür die Anlage der beweglichen Anschlagelemente (30) an den komplementären Anschlagmitteln (26, 29) des Türrahmens (22) verhindert, dass diese beweglichen Organe (30) in ihre eingefahrene Entriegelungsposition bewegt werden,
**dadurch gekennzeichnet, dass** die Vorrichtung zum Steuern der Anschlagmittel (40) Folgendes aufweist:
- eine Betätigungsmembran (42), die am Umfang der Tür angeordnet ist und mit den beweglichen Anschlagelementen (30) zusammenwirkt, wobei die Membran (42) eine Steuerkammer (46) begrenzt;
- Mittel zum Steuern des Drucks (50) der Steuerkammer (46), wobei der Druck im Inneren der Kammer (46) die Position der Membran (42) und die der beweglichen Anschlagelemente (30), die mit dieser Membran zusammenwirken, bedingt.

2. Türsystem nach Anspruch 1, **dadurch gekennzeichnet, dass** jedes bewegliche Anschlagorgan (30) ein erstes Ende (30a), das am Umfang der Tür angelenkt ist, sowie ein zweites Ende (30b), das dem ersten Ende gegenüberliegt und ein Kontaktende mit dem Türrahmen bildet, aufweist.

3. Türsystem nach Anspruch 2, **dadurch gekennzeichnet, dass** das zweite Ende (30b) eine abgerundete Kontaktfläche (36) begrenzt.

4. Türsystem nach einem der vorangehenden Ansprüche, **dadurch gekennzeichnet, dass** die Betätigungsmembran (42) fest mit den beweglichen Anschlagelementen (30) verbunden ist.

5. Türsystem nach Anspruch 4, **dadurch gekennzeichnet, dass** die Steuervorrichtung der Anschlagmittel (40) außerdem elastische Rückstellmittel (52) aufweist, die die beweglichen Anschlagelemente (30) in die eingefahrene Entriegelungsposition zurückstellen, indem sie eine Kraft erzeugen, die den auf die Betätigungsmembran (42) im Inneren der Steuerkammer (46) wirkenden Druckkräften entgegenwirkt, wobei die elastischen Rückstellmittel (52) vorzugsweise im Inneren der Steuerkammer (46) angeordnet sind.

6. Türsystem nach Anspruch 4 oder Anspruch 5, **dadurch gekennzeichnet, dass** die Betätigungsmembran (42) eine Dichtung (48) zwischen der Tür (6) und dem Türrahmen (22) bildet, wobei die Dichtung (48) entlang des gesamten Umfangs der Tür durchgehend ist.

7. Türsystem nach einem der vorangehenden Ansprüche, **dadurch gekennzeichnet, dass** die Türantriebsvorrichtung (54) Folgendes aufweist:
- mindestens einen Steuergriff (18);
- mindestens ein Steuerorgan (56), das durch den Steuergriff (18) gesteuert wird und entlang einer Gelenkachse (60) an der Tür angelenkt ist, wobei jedes Steuerorgan eine Führungsbahn (62) definiert, die ein mit dem Türrahmen (22) verbundenes Folgeorgan (64) aufnimmt.

8. Türsystem nach Anspruch 7, **dadurch gekennzeichnet, dass** die Türantriebsvorrichtung (54) so gestaltet ist, dass jedes Steuerorgan (56) zwischen einer Halteposition und einer Freigabeposition gedreht werden kann, wobei diese Drehung des Steuerorgans entlang der Gelenkachse (60) zwischen seiner Halteposition und seiner Freigabeposition eine Verschiebung des Folgeorgans (64) entlang der Führungsbahn (62) bewirkt, wodurch die Tür (6) aus ihrer geschlossenen Position in ihre zurückgezogene Zwischenposition gebracht wird.

9. Türsystem nach Anspruch 8, **dadurch gekennzeichnet, dass** das Steuerorgan (56) in seiner Halteposition durch das Folgeorgan (64) daran gehindert wird, sich relativ zum Türrahmen (22) in das Innere des Raums (8) zu bewegen, und dass sich das Steuerorgan (56) in seiner Freigabeposition relativ zum Türrahmen (22) nach außen bewegen kann.

10. Luftfahrzeug (1), umfassend einen Rumpf (2), der mit mindestens einem Türsystem (4) nach einem der vorangehenden Ansprüche ausgestattet ist.

## Claims

1. Door system (4) for aircraft fuselage, the system comprising:
- a door frame (22) delimiting an opening (24) in the fuselage (2), the opening giving access to a compartment (8) of the aircraft;
- a door (6) provided to block the opening (24) when the door occupies a closed position, this closed position of the door being intended to be maintained by pressure difference between the outside of the fuselage (2) and the compartment (8);
- stop means (30) arranged at a periphery of the door, and intended to press on complementary stop means (26, 29) provided on the door frame,
the system comprising also a door control device (54) configured to bring the door (6) from its closed position into a set-back intermediate position by moving the door towards the interior of the compartment (8) and, vice versa, by moving the door outward,
the stop means comprising a plurality of mobile stop members (30) following each other along the periphery of the door,
the system comprising also a stop means control device (40) configured such that, when the door (6) occupies its set-back intermediate position, a movement is provoked of the mobile stop members (30) from a deployed locking position to a retracted unlocking position allowing the door to be moved outward through the opening (24) in the fuselage,
the system being configured so that, in the closed position of the door, the pressing of the mobile stop members (30), against the complementary stop means (26, 29) of the door frame (22), prevents these mobile members (30) from being moved to their retracted unlocking position,
**characterized in that** the stop means control device (40) comprises:
- an actuation membrane (42) arranged at the periphery of the door and cooperating with the mobile stop members (30), the membrane (42) delimiting a control chamber (46); and
- pressure control means (50) for the control chamber (46), the pressure inside the chamber (46) conditioning the position of the membrane (42) and that of the mobile stop members (30) cooperating with this membrane.

2. Door system according to claim 1, **characterized in that** each mobile stop member (30) has a first end (30a) articulated on the periphery of the door, and a second end (30b) opposite the first and forming an end for contact with the door.

3. Door system according to claim 2, **characterized in that** the second end (30b) delimits a rounded contact surface (36).

4. Door system according to one of the preceding claims, **characterized in that** the actuation membrane (42) is secured to the mobile stop members (30).

5. Door system according to claim 4, **characterized in that** the stop means control device (40) also comprises elastic return means (52), returning the mobile stop members (30) to the retracted unlocking position, by generating a force opposing the pressure forces that are exerted on the actuation membrane (42) inside the control chamber (46), the elastic return means (52) being preferentially arranged inside the control chamber (46).

6. Door system according to claim 4 or claim 5, **characterized in that** the actuation membrane (42) forms a seal (48) between the door (6) and the door frame (22), the seal (48) being continuous all along the periphery of the door.

7. Door system according to one of the preceding claims, **characterized in that** the door control device (54) comprises:
- at least one control handle (18);
- at least one control member (56) driven by the control handle (18) and mounted articulated on the door along an articulation axis (60), each control member defining a guiding track (62) receiving a following member (64) secured to the door frame (22).

8. Door system according to claim 7, **characterized in that** the door control device (54) is configured such that each control member (56) can be rotated between a holding position and a release position, this rotation of the control member about the articulation axis (60), between its holding position and its release position, provoking a movement of the following member (64) along the guiding track (62), conducting the door (6) from its closed position to its set-back intermediate position.

9. Door system according to claim 8, **characterized in that**, in its holding position, the control member (56) is prevented by the following member (64) from moving relative to the door frame (22), toward the interior of the compartment (8), and **in that**, in its release position, the control member (56) can be moved outward relative to the door frame (22).

10. Aircraft (1) comprising a fuselage (2) equipped with at least one door system (4) according to one of the preceding claims.
